# EUROPEAN PATENT APPLICATION

(11) **EP 4 439 343 A1**
(43) Date of publication of application: **02.10.2024**
(21) Application number: 23164548.2
(22) Date of filing: 28.03.2023
(51) Int. Cl.: G06F 21/10, G06F 21/16, G06F 21/64, H04L 9/32, H04L 9/00, H04L 9/40

(54) **PROCESSING AT LEAST ONE FILE USING A TOKEN**

(71) Applicant: C2CC GmbH, 6300 Zug (CH)
(72) Inventor: GALDIANO, Josu, 20800 Zarautz (ES); KOPPEL, Farid Alexander, 1188 Saint-George, Vaud (CH)
(74) Representative: Müller-Boré & Partner Patentanwälte PartG mbB

(57) **Abstract**

Aspects relate to a computer-implemented method, a computer program, a medium and a system for processing at least one file using a token. The method comprises storing the file on a server. The method further comprises storing the token in a distributed ledger, wherein the token includes a reference providing access to the file and an indication of ownership, wherein the reference providing access to the file can be used to locate the file on the server. The file comprises: an identifier, a reference to a certificate, and an encoding of binary data in a sequence of printable characters.

## Description

The technical field relates to cryptography, computer networking, and distributed file systems. More specifically, disclosed subject matter relates to a token for processing at least one file. The token may be recorded (i.e., stored) in a distributed ledger.

Conventional approaches to processing a file using a token stored in a distributed ledger only allow a single file (rather than multiple files or different files) to be associated with the token. The single file may be a binary file, i.e., a non-text file or binary format file that includes non-printable characters. Furthermore, the single file cannot change, i.e., the file is fixed or immutable. The reason for the immutability is that the file is an asset whose value is based on characteristics of the file.

In some cases, a non-fungible token (NFT) minted according to a conventional standard for cryptographic tokens, such as the Ethereum ERC-721 or ERC-1155 standards, may include a uniform resource identifier (URI) that references JavaScript Object Notation (JSON) metadata. In turn, the JSON metadata may include a URI referencing a digital asset (e.g., image) corresponding to the token. The URI may include a hash of the content referenced by the URI in order to ensure immutability of that content (i.e., if the content changes, the hash no longer corresponds to the content). ERC-721, ERC-1155 and similar Ethereum standards relating to cryptographic tokens (e.g., ERC-165 or ERC-20) may be referred to as conventional standards for cryptographic tokens. Conventional standards may also refer to other cryptocurrencies compatible with or derived from Ethereum (also referred to as Ethereum-based derivatives), e.g., cryptocurrencies implementing smart contracts via Solidity, such as XRP (Ripple).

Accordingly, it may be desirable to improve the flexibility of files processed using a token. More specifically, it may be desirable to enable different types of data and files (e.g., text data and one or more types of binary files) to be tracked via a single token stored in a distributed ledger. It may also be desirable for the token to be compatible with cryptocurrency wallets (i.e., crypto wallets) that support at least one conventional standard for cryptographic tokens.

Moreover, it may be a problem to link multiple types of data (e.g., binary data, a certificate, an author, an indication of a duration of validity) to a single token stored in the distributed ledger.

Following conventional standards for cryptographic tokens, a solution to the problem of linking multiple types of data to a single token would be to create multiple files, one file for each type of data, and then to link each file to a separate token in the distributed ledger. For example, according to a conventional approach, there would be one file for a certificate, one file for a corresponding image and one file for a duration of validity. In addition, each file would have a separate corresponding token. However, this approach is undesirable in view of the cost associated with having separate tokens for each file.

According to an aspect, a computer implemented method for processing at least one file using a token is provided. The method comprises storing the file on a server. The method further comprises storing the token in a distributed ledger, wherein the token includes a reference providing access to the file and an indication of ownership, wherein the reference providing access to the file can be used to locate the file on the server. The file comprises an identifier, a reference to a certificate, and an encoding of binary data in a sequence of printable characters.

The method may further comprise updating the encoding to reflect a change to the certificate. The token may provide access to an authenticity indicator of the file. The method may further comprise updating the authenticity indicator of the file in response to updating the encoding.

The token may be a cryptographic (i.e., crypto) token. For example, the (cryptographic) token may be one or more of the following: utility (e.g., ERC20), asset-backed, security, non-fungible.

When the token is non-fungible, the token may be uniquely identifiable and not mutually interchangeable with comparable tokens. Accordingly, the token may represent ownership of a unique asset.

The token could also be fungible (e.g., similar to crypto currency). For example, multiple tokens corresponding to interchangeable assets may be minted (i.e., created).

Storing the token in the distributed ledger may include storing code (e.g., a smart contract) to compute the token in the distributed ledger.

The reference may provide access to the file or the reference can be used to locate the file by specifying the location of the file on the server, e.g., via an address. The reference may uniquely identify the file on the server.

The token may provide access to the authenticity indicator of the file via code (e.g., an application programming interface) that provides access to metadata of the token, the metadata including the authenticity indicator of the file. The authenticity indicator of the file may be used to verify of a creator/source of the file and/or to verify of the content of the file.

The distributed ledger may be a consensus of replicated, shared, and synchronized digital data spread across multiple storage devices and implemented using a distributed database. The distributed database may include a plurality of storage devices, which might not attached to a common processor. For example, the distributed database may be stored in multiple computers, located in the same physical location or on a network of interconnected computers. The distributed database may include loosely coupled sites that share no physical components.

The distributed ledger may be implemented using a peer-to-peer network. Accordingly, substantially all of the nodes (i.e. devices) in the peer-to-peer network may maintain an identical copy of the distributed ledger.

The encoding of binary data may be an encoding of a binary file. The encoding may include an identification of a type of the binary file (e.g., an image or document format). In some cases, the encoding may include Unicode code points or code positions. In addition or alternatively, the encoding may be based a character encoding standard for electronic communication, such as the American Standard Code for Information Interchange (ASCII).

The binary file may be a non-text file or binary format file and may include non-printable characters. Hence, the encoding may involve encoding the non-printable characters of the binary file as printable characters. The binary file may store or represent data more compactly than a text file, e.g., each data element of the binary file occupies the same number of bytes on secondary storage media (e.g., hard disk or solid state drive) as it would on primary storage media (e.g., Random Access Memory). Examples of binary files include executables, multimedia, compressed data, formatted documents. The following heuristic may be used to determine whether a file is binary: if the first 1024 bytes do not contain any NULL bytes. Magic numbers (i.e., signatures) can be used as a form of in-band signaling to a control program to distinguish between a text file and a binary file and may identify a type of the binary file.

The file accessible via the reference of the token (referred to above) may be referred to as a compound file.

The reference providing access to the file may include a URI referring to metadata. The metadata may include a URI referring to the file. Alternatively, the reference providing access to the file may include a URI that refers to the file.

The method may further comprise receiving a selection of an image, wherein the image is uploaded by a user or copied from a database. The method may further comprise adding the image to the file. The steps may be carried out before storing the file on the server. Accordingly, the binary data encoded in the sequence of printable characters may include the image.

The indication of ownership may be a 42 character hexadecimal address of an owner, and operator or a controller. The indication of ownership may be and an Ethereum address or an Ethereum-based derivative address. An Ethereum-based derivative may be another cryptocurrency that uses the Solidity language or Ethereum-based smart contracts, such as Tether (e.g., USDT) or XRP. The indication of ownership may be an Externally Owned address (e.g., a cryptographic address referring to a cryptocurrency account having a public and private key pair and holding funds in a cryptocurrency such as Ethereum or Tether).

Updating the encoding may comprise accessing the file using the token, wherein accessing the file comprises accessing the encoding. Additionally or alternatively, updating the token may comprise updating the authenticity indicator of the file to reflect the updated encoding.

The method may further comprise transmitting means of accessing the token to a digital wallet (i.e., E-wallet). The means of accessing the token may be a key (e.g., a private key) corresponding to an address of the token in the distributed ledger. In other words, the address of the token may correspond to the public key of the digital wallet. More specifically, the token may include the public key of the digital wallet. The digital wallet may be a cryptocurrency wallet. The digital wallet may be one or more of the following: an Ethereum wallet, an Ethereum-based derivative wallet, an NFT wallet.

A digital wallet may include software which provides access to private and public keys and uses a digital ledger (e.g., blockchain) to send and receive cryptocurrency (e.g., Ethereum or Tether). The digital wallet may facilitate operations on the digital ledger such as to send or receive cryptocurrency, monitor a cryptocurrency balance, trade cryptocurrency. The public and private keys may be parts of an asymmetric cryptosystem in which an encryption operation is performed using one key that is different from another key used to perform a decryption operation. For example, a public key can be used to encrypt a message and a private key can be used to decrypt a message.

The digital wallet may be a mobile-based wallet and may offer multi-layer authentication. The digital wallet may be an E-Wallet, a crypto wallet, a hardware wallet or a software wallet that is compatible with at least one conventional standard, e.g., ERC-721.

In some cases, the reference providing access to the file includes a URI (e.g., a uniform resource locator - URL). The reference providing access to the file may include the authenticity indicator of the file. The authenticity indicator of the file may include a cryptographic hash and/or the authenticity indicator may be computed using a cryptographic hash function. The cryptographic hash function may have one or more of the following properties: collision-resistance, pre-image resistance, and resistance to second pre-images. The cryptographic hash function may map a bit string of arbitrary finite length to a string of fixed length. The cryptographic hash function may be one-way. The cryptographic hash function may include Keecak, SHA-3 (e.g., SHA-3-256), or SHA-2 (e.g., SHA-256).

In some cases, the distributed ledger is implemented using a peer-to-peer computer network and/or one or more consensus algorithms for replication across distributed computer nodes. The distributed ledger may include a blockchain. Specifically, the distributed ledger may include a list of records (i.e., blocks), where each block contains a cryptographic hash of the previous block, a timestamp, and transaction data (possibly represented as a Merkle tree, where data nodes may be represented by leaves). The distributed ledger may be used to record transactions across multiple (e.g., at least three, at least 10, at least 50, or at least 100) computers so that any block of the distributed ledger cannot be altered retroactively without the alteration of all subsequent blocks.

The file that is processed using the token may be a text file, i.e., a text file including encoded binary data from a binary file. For example, the file may be a markup language file, e.g., an extensible markup language (XML) file. Alternatively, the file may be a JavaScript object notation (JSON) file.

The encoding of binary data may be base64, or a variant of base64 such as base122 or baseXML. The printable characters may be human-readable. The printable characters may be limited to 95 printable ASCII characters or a subset of the 95 printable ASCII characters.

The server may be part of a distributed file system. The distributed file system may be one or more of the following: permanent, based on a computer network (e.g., the computer network may be peer to peer), permissionless, decentralized. In this context, permanent indicates that files are stored regardless of whether a fee is regularly paid and may be contrasted with storage typically provided by cloud storage service providers, such as Amazon S3. The distributed file system may be multi-tenant and/or off-premises.

The distributed file system may be a network file system and may have characteristics of a clustered file system. For example, the distributed file system may provide location-independent addressing and/or redundancy. Files of the distributed file system may be accessed using interfaces and semantics typically used for local files.

In some cases, the content of the file is split into blocks.

The distributed file system may be separate from the distributed ledger and/or the distributed file system might not be part of the distributed ledger. Storage elements in the distributed file system (e.g. files) may be stored in a directed acyclic graph, wherein the directed acyclic graph may be a Merkle directed acyclic graph. The distributed file system may include a distributed hash table split across nodes of the computer network to store provider records wherein the provider records may locate peers of the computer network that store the storage elements. The storage elements may include the content of the file. The distributed file system may include the interplanetary file system (IPFS).

Processing the file may include one or more of the following: accessing the file, identifying the file, updating the file and tracking the file. The token may represent ownership of a digital asset, i.e., the indication of ownership may indicate ownership of the digital asset. The token may include a unique identifier. The file may include one or more certificates. In addition or alternatively, the file may include one or more of the following:
- a (possibly unique) static image or static picture;
- an (dynamic) image configured to gradually change;
- a moving image or movie or film;
- a game and/or game character, possibly from or for use in a metaverse;
- a counter or meter, e.g., to indicate power used, or for use with a vehicle and/or to indicate a distance traveled (e.g., as determined via a global navigation satellite system, such as the global positioning system).

The file may also include a number indicating that the digital asset is part of a limited series.

The file may include an indication of validity. The indication of validity may include one or more of the following: a duration of validity, an indication of energy consumption, an indication of usage, a counter indicating the number of times the file has been opened. The indication of validity may be an expiration date and/or a duration indicating how long it will be until the digital asset expires; the indication of validity may be a duration of validity of the certificate.

The file may further comprise, but is not limited to, a creation date and/or a creation location. The identifier of the file may identify an author or creator of the file. The identifier of the file may include a title.

When the file includes the indication of the duration of validity, the change to the certificate may include a change in the duration of the validity. Updating the encoding may comprise changing the binary data to reflect a decrease in the duration of the validity. The duration of the validity may correspond to (e.g., reflect the validity of) the certificate. For example, updating the encoding may reflect a gradual change to an image included in the binary data. More specifically, the gradual change may show an image of flowers slowly wilting or a male person becoming older.

The reference to the certificate may be a URI. One or more of the following may be defined using markup language (e.g., XML) tags: the identifier, the encoding, the indication of validity and the reference to the certificate.

The binary data may include one or more of the following:
- multimedia content,
- a static image,
- data in a document file format, such as a compressed XML-based format (e.g., docx), rich text format,
- data in a postscript language format, such as portable document format (PDF),
- audio and/or video content,
- a videogame,
- a natural number, optionally based on the indication of validity.

According to another aspect, a computer program (product) is provided. The computer program comprises instructions that, when the program is executed by a computer, cause the computer to carry out all or part of the method described above.

According to yet another aspect, a computer readable medium is provided. The computer readable medium may store the computer program mentioned above. The computer program may be tangibly embodied in the computer readable medium.

According to an additional aspect, a computer system for processing at least one file using a token is provided. The computer system comprises one or more processors. The computer system further comprises a server configured to store the file. The computer system further comprises a distributed ledger configured to store the token. The token includes a reference providing access to the file and an indication of ownership. The reference providing access to the file can be used to locate the file on the server. The file comprises an identifier, a reference to a certificate, and an encoding of binary data in a sequence of printable characters.

A processor, as used herein, may refer to central processing units, microprocessors, microcontrollers, reduced instruction set circuits (RISC), digital logic circuits such as a Field-Programmable Gate Arrays (FPGA) or application specific integrated circuits (ASIC), and any other circuit or processor capable of executing the functions described herein.

The one or more processors may be configured to update the encoding to reflect a change to the certificate. The token may provide access to an authenticity indicator of the file and the processors may be further configured to update the authenticity indicator of the file in response to updating the encoding.

An update of the encoding once a duration of validity expires may eliminate the token.

The computer system may be configured to carry out all or part of the method described above.

The subject matter described in this disclosure can be implemented as a method or on a device, possibly in the form of one or more computer programs (e.g., computer program products). Such computer programs may cause a data processing apparatus to perform one or more operations described in the present disclosure.

The subject matter described in the present disclosure can be implemented in a data signal or on a machine readable medium, where the medium is embodied in one or more information carriers, such as a CD-ROM, a DVD-ROM, a semiconductor memory, or a hard disk. In particular, disclosed subject matter may be tangibly embodied in a machine (computer) readable medium.

In addition, the subject matter described in the present disclosure can be implemented as a system including a processor, and a memory coupled to the processor. The memory may encode one or more programs to cause the processor to perform one or more of the methods described in the application. Further subject matter described in the present disclosure can be implemented using various machines.

Details of one or more implementations are set forth in the exemplary drawings and description that follow. Other features will be apparent from the description, the drawings, and from the claims.

### Brief Description of the Drawings

FIG 1 shows steps to create a token and a corresponding file that may be implemented in some embodiments.
FIG 2 shows steps that may be carried out once the token and the corresponding file have been obtained.
FIG 3 shows a conventional approach for processing at least one file using a token and an approach for processing at least one file using a token according to some embodiments.
FIG 4 shows a method for processing at least one file using a token.
FIG 5 shows an example of the file.

### Detailed Description

In the following text, a detailed description of examples will be given with reference to the drawings. Various modifications to the examples may be made. In particular, one or more elements of one example may be combined and used in other examples to form new examples.

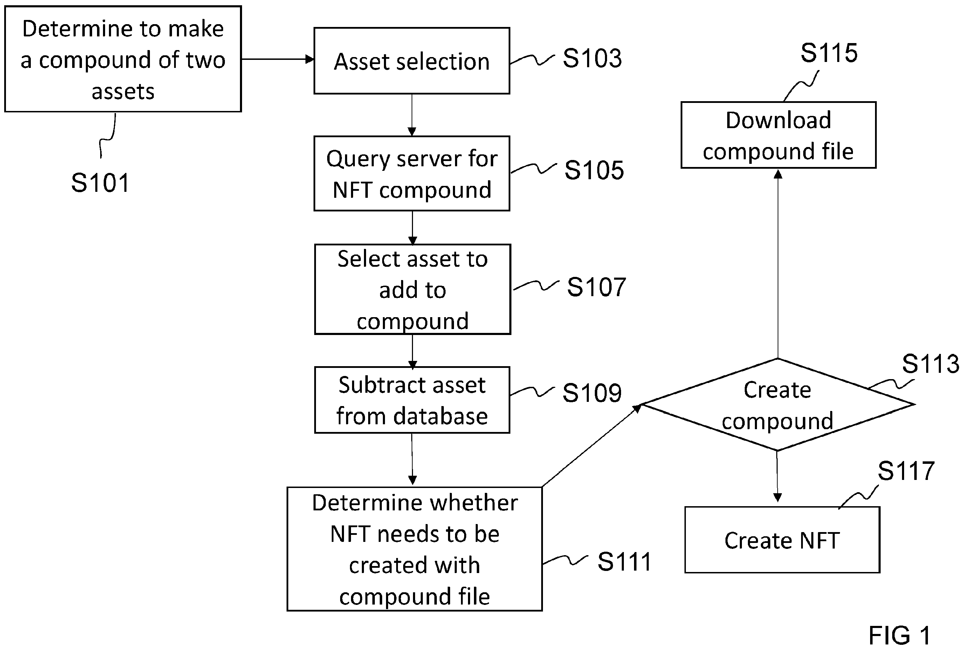

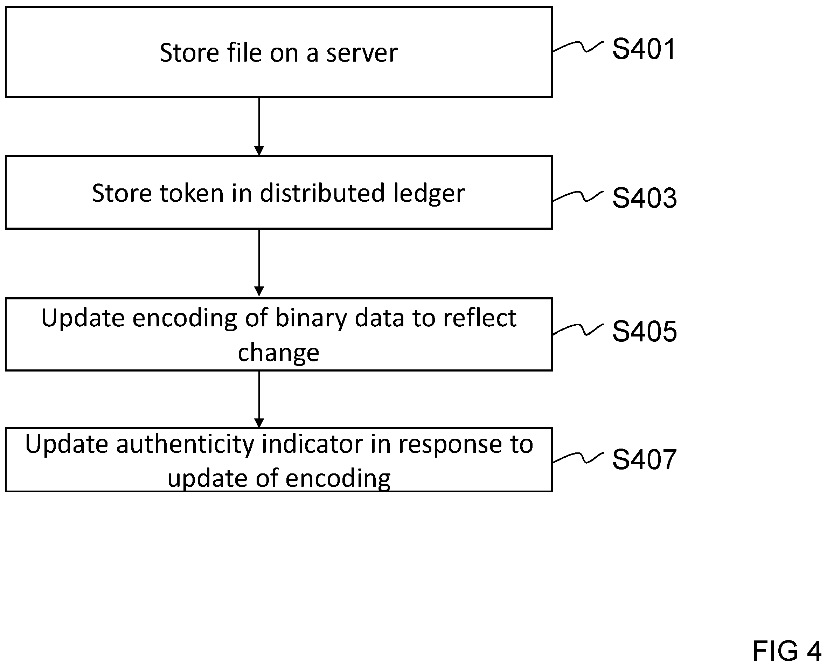

Figure 1 shows a method for creating a compound file and a corresponding token. Once created, the file may be processed using the token, e.g., as described with respect to figure 4 below.

At S101, a determination may be made to make a compound file including two digital assets. The digital assets may include a certificate or a reference to the certificate and an encoding of binary data in a sequence of printable characters.

At S103, one of the digital assets may be selected. For example, a user may upload an image to a server (e.g., an authorized server) where a plurality of certificates (e.g., emission certificates) are stored. Alternatively, the user may select an image from a plurality of stored images. The image may be a moving image (i.e., film or movie) or a static image.

At S105, the server may receive a query or instructions to select one of the certificates. At S107, a certificate may be selected by the server, e.g., at random or based on specified criteria, to add to the compound file. In some cases, a reference to the certificate may be added to the compound file. The certificate may be a certificate of ownership corresponding to the image and/or a certificate of ownership corresponding to another asset. The other asset may be linked to the image or may be a tangible asset.

At S109, a database record may be modified to indicate that the certificate is owned by the user and/or to indicate the image corresponding to the certificate. At S111, a determination may be made to create a token corresponding to the compound file. In this case, the token is a nonfungible token (NFT). However, a fungible token could also be used.

At S113, the compound file, including the certificate selected at S107 and the image selected at S103, may be created. More specifically, the compound file may include a reference to the certificate and the encoding of binary data (i.e., the encoding of the selected image) as a sequence of printable characters. The encoding may be in base64 or another suitable format. The reference to the certificate may include a URI specifying a location of the certificate on a server (e.g., a secure server and/or a server implemented as part of a distributed file system).

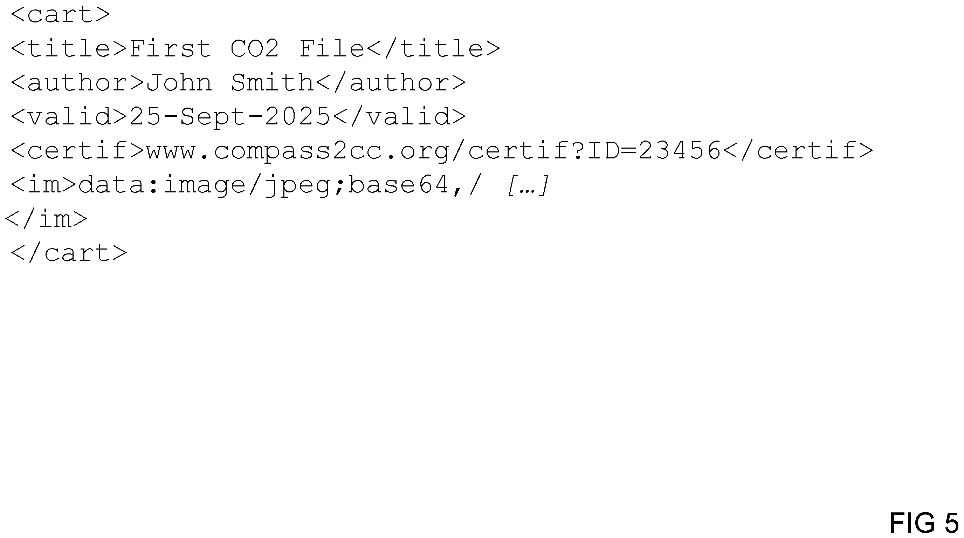

The compound file may be a markup language file. More specifically, the compound file may be an XML file. The compound file may include one or more markup language tags. The tags may define properties of the certificate such as one or more of the following: a title, an author, a creation date, a creation location, an indication of validity (e.g., of the asset or of the certificate), the reference to the certificate. For example, the compound file may include the tags shown in figure 5.

The indication of validity could be used to provide another level of expression, such as, a change to the digital assets over time. For example, the image may fade or wilt over time as a duration of validity included in the indication of validity decreases. In addition or alternatively the indication of validity may reflect metered consumption based on distance traveled or another unit of measurement.

Once the indication of validity indicates that the certificate is no longer valid, the digital asset (e.g., the image) may be used as an image file or for another purpose allocated to the file upon its creation or defined later.

In some cases, the compound file may include the certificate itself.

At S115, the compound file may be downloaded by the user. In addition or alternatively, the compound file may be stored on the secure server and the user may be provided with a URI specifying a location of the compound file on the secure server, as discussed in connection with step S403 below. The secure server may be part of a distributed file system and may include a peer-to-peer computer network. More specifically, the secure server may be implemented using the interplanetary file system (IPFS).

At S117, the NFT may be created according to the determination at S111.

The NFT may be registered (i.e., stored) in a distributed ledger. More specifically, the NFT may be stored on a blockchain, such as Ethereum or an Ethereum-based derivative, as discussed in connection with step S401 below. The NFT may have an address on the blockchain corresponding to a private key of a digital wallet of the user. More specifically, the address of the NFT may include a public key corresponding to the private key of the digital wallet.

Accordingly, the token may be traded on an NFT marketplace, such as OpenSea or Rarible.

A software application may be provided to check a validity of the compound file. Specifically, the software application may determine whether the certificate is still valid. The determination may be made using the indication of validity provided in the compound file, e.g., by using an expiration date in the compound file.

Accordingly, the software application may use the indication of validity to show gradual change in the validity of the certificate, a binary indication of validity or colored lights. For example, the colored lights may be displayed as red for no longer valid, yellow indicating that the certificate is close to expiration, or green indicating that the certificate is valid and has at least a specified duration (e.g., one month) of validity remaining. Hence, one digital asset of the compound file (e.g., an image) would enable the user to quickly and easily determine whether another digital asset of the compound file (e.g., the certificate) is valid.

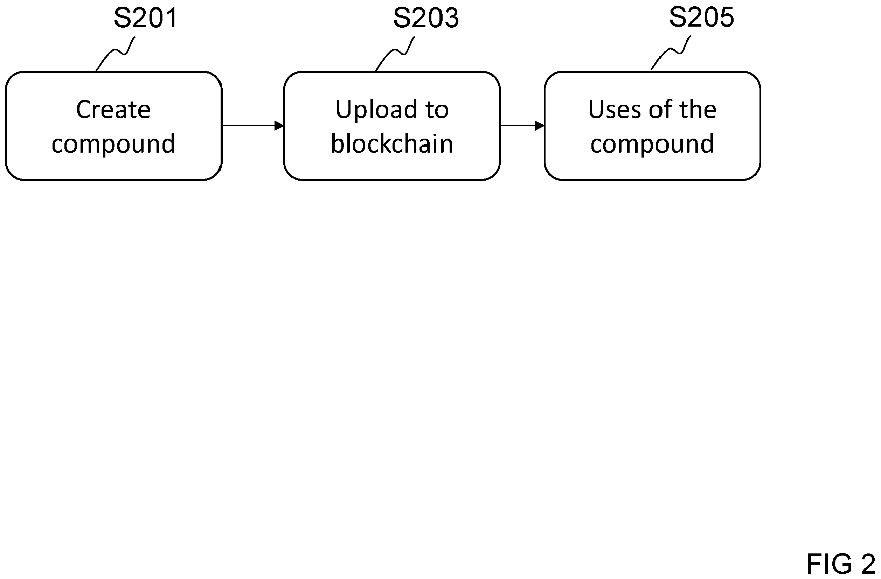

Figure 2 shows steps that may be carried out after the compound file is created. These steps may be carried out in addition or alternatively to steps of the method for processing the file using the token, as discussed below in connection with figure 4.

Step S201 may correspond to step S113. Accordingly, step S201 may include uploading binary data (e.g., an image) to a server in response to a request from a user. The server may store or access a repository of certificates and assign one of the certificates to the uploaded binary data. The binary data may be encoded in a sequence of printable characters, e.g., in base64. A file (e.g., an XML file as discussed above with respect to figure 1) may be created and may include a reference (e.g., a URI) to the certificate, an identifier, the encoded binary data, and other elements as discussed with respect to figure 1.

At step S203, a token corresponding to the file may be stored in a distributed ledger (e.g., a blockchain). The file may be stored on a server (e.g., part of a distributed file system such as IPFS) or provided to the user.

At step S205, the user may carry out transactions with the file and the token.

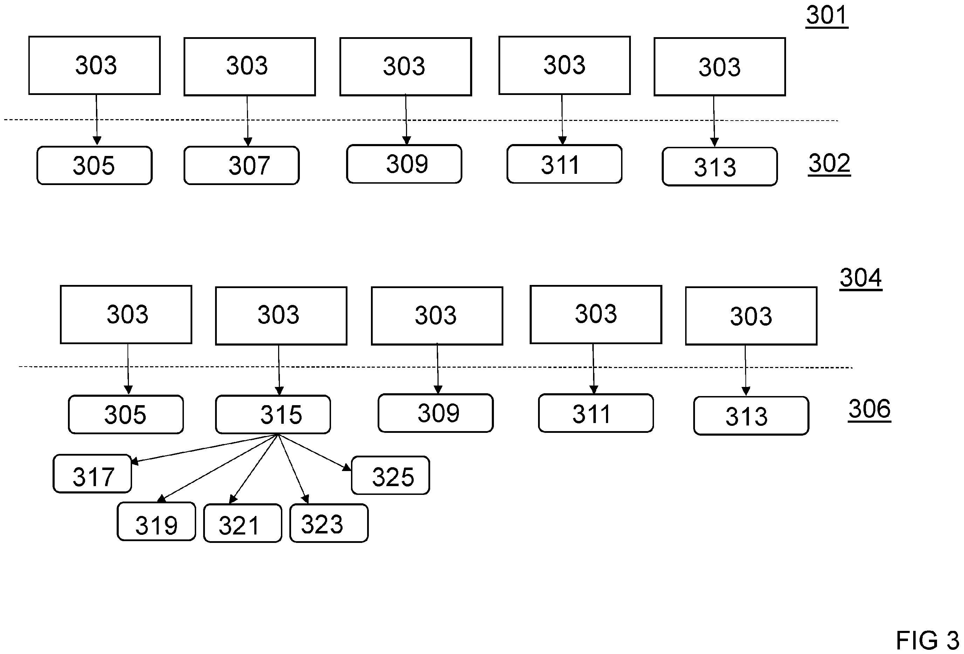

Figure 3 shows a conventional blockchain 301 including blocks 303. The blocks 303 are linked to binary data files (i.e., files storing binary data) having different formats. In particular, the blocks 303 are linked to a PDF format file 305, a joint photographic experts group (JPEG) format file 307, an open office XML (docx) format file 309, a graphics interchange format (GIF) file 311, and a motion picture experts group (MPG) file 313. Hence, the blocks 303 are linked (e.g., via corresponding URIs) to files 305 to 313 that are stored on a distributed filesystem 302, such as IPFS.

Accordingly, each of the blocks in the conventional blockchain 301 is attached to a unique and static binary file 305 to 313. Each of the binary files 305 to 313 is immutable, i.e., the files do not change in any way and therefore offer limited functionality outside of the registration of data in a single format. The immutability may be set according to a standard, e.g., ERC-721 or ERC-1155. More specifically, the immutability may be set by a JSON metadata schema provided with the standard, e.g., the ERC-721 metadata JSON schema.

A blockchain 304 according to some embodiments described herein is also depicted. The blockchain 304 includes blocks 303 and is linked to a server (e.g., the secure server described above). In this case, the server is part of a distributed filesystem 306. Each of the blocks 303 may store a token. The blocks 303 may be linked to the files in the distributed filesystem 306 via references that provide access to the files.

The blockchain 304 may correspond to the blockchain 301 except that one of the blocks 303 is linked to a file 315. The file 315 may include an encoding of binary data in a sequence of printable characters. Accordingly, rather than being limited to a single format, as with the binary files 305 to 313, the file 315 may include not only encoded binary data corresponding to the binary data of any one of the files 305 to 313 but also additional elements, such as an identifier and a reference to a certificate. In this way, the file 315 combines encoded binary data with the additional elements, thereby enabling the file 315 to provide a basis for additional functionality, e.g., enabling the software application discussed in connection with figure 1 to show changes to an image.

Moreover, the file 315 may be used in combination with any binary data format. For example, the file 315 may include an encoding of binary data corresponding to a docx format file 317, or a JPEG format file 319, or a PDF format file 321, or a Rich Text Format (RTF) file 323, or a binary file having another format 325. The file 315 may have a format corresponding to the markup language tags shown in figure 5.

In view of the flexibility provided by the file 315, a variety of applications are possible that would not be feasible with conventional standards for cryptographic tokens unless the standards were modified or otherwise supported.

For example, the file 315 may support a digital lithograph. Accordingly, the encoding of binary data in the file 315 may include an image. In addition, the file 315 may include a sequence number indicating that the lithograph is part of a limited series, and a certificate of authenticity. Accordingly, the image, the sequence number and a reference to the certificate may be combined in the file 315.

As another example, the file 315 may support a greeting card. Accordingly, the encoding of binary data in file 315 may include an image. In addition, the file 315 may include a reference to a certificate, and an indication of validity. The indication of validity may be readable by the software application, which can show the image deteriorating over time, e.g., flowers wilting.

As yet another example, the file 315 may support a movie. Accordingly, the encoding of binary data in the file 315 may include video data. The file 315 may further include a reference to a certificate and an indication of validity. The movie may be used as a gradual indicator that shows the certificate being depleted over time and/or through use. The indication of validity may be readable by the software application.

As an additional example, the file 315 may support a video game. In this case and similar to the previous example, video data in the file 315 may show a game character as a moving image. The file 315 may further include a reference to a certificate and an indication of validity.

As a further example, the file 315 may support a counter or meter. Accordingly, the file 315 may include a quantity that decreases over time and/or over distance. The file 315 may further include a reference to a certificate (e.g., a carbon certificate and/or a certificate corresponding to another commodity such as water rights).

As another example, the file 315 may support a real estate usufruct. Accordingly, the encoding of binary data in the file 315 may include an image of a property. The file 315 may further include an indication of validity (e.g., a timer indicating available time for using the real estate). The indication of validity may be readable by the software application and the software application may show an indicator of remaining duration (e.g., how long the certificate will be valid) corresponding to the indication of validity.

The file 315 may also include an access code, e.g., a barcode such as a quick response code, giving access to a tangible and/or intangible asset for a predetermined period of time.

As an additional example, the file 315 may support use of tangible information technology equipment, such as computers or phones. Accordingly, the file 315 may include an indicator corresponding to power used by the equipment, which may be calculated or read from an interface with the equipment. The file 315 may further include a reference to a certificate, corresponding to a right to use software associated with the information technology equipment.

As a further example, the file 315 may support interaction with a metaverse. Accordingly, the encoding of binary data in the file 315 may include a moving or fixed image of a character or item or object from the metaverse. The file 315 may further include a reference to a certificate indicating ownership of the entity depicted in the image. The file 315 may also include an indication of validity, which could be used by the software application to show the entity from the metaverse deteriorating or degrading as in the real world. Moreover, ownership could be tracked and evidence of ownership could be provided using the token of the block 303 linked to the file 315.

Accordingly, the same file 315 may be used to combine a certificate and an identifier with binary data having an arbitrary format and register a corresponding token on a distributed ledger (e.g., a blockchain).

With strict adherence to the conventional standards for cryptographic tokens mentioned above, the examples above (e.g., the digital lithograph, movie, game, counter, access code, real estate usufruct, use of IT equipment and metaverse objects) would not be possible.

Figure 4 shows a method for processing at least one file using a token. At step S401, the file is stored on a sever. At step S403, the token is stored in a distributed ledger. The token includes a reference providing (e.g., enabling or facilitating) access to the file and an indication of ownership (e.g., a public key or address). The reference providing access to the file can be used to locate (e.g., find or retrieve) the file on the server. The reference may uniquely identify the file on the server. Hence, when the server is part of a distributed filesystem (e.g., IPFS), the reference may uniquely identify the file on the distributed filesystem.

The token may provide access to an authenticity indicator of the file.

In some cases, the token may include executable code (e.g., a smart contract) and the code may be executed to retrieve the reference providing access to the file. For example, the code may be executed to retrieve metadata including the reference. The authenticity indicator may be included in the reference. For example, when the reference is implemented as a URL, the authenticity indicator may be included in a *pathinfo* component of the URL. The authenticity indicator may be sufficient to uniquely identify the file on the server.

The file comprises an (unique) identifier, a reference (e.g., a URI) to a certificate, and an encoding of binary data in a sequence of printable characters, i.e., an encoding of non-text data as text data. The certificate may be a carbon certificate.

At step S405, the encoding may be updated to reflect a change to the certificate. At step S407, the authenticity indicator may be updated in response to the update of the encoding.

As shown in figure 5, the compound file may include an optional title, "First CO2 File", an author/creator, "John Smith", an optional indication of validity (e.g., an expiration date), "25-Sept-2025", a reference to the certificate, "www.compass2cc.org/certif?ID=23456". The <im> tag includes the encoding of binary data (in this case, an encoded JPEG image). The encoding is abbreviated using "*[*...*]*".

## Claims

1. A computer-implemented method for processing at least one file (315) using a token, the method comprising:
storing (S401) the file (315) on a server;
storing (S403) the token in a distributed ledger, wherein the token includes a reference providing access to the file (315) and an indication of ownership, wherein the reference providing access to the file (315) can be used to locate the file (315) on the server,
wherein the file (315) comprises:
an identifier,
a reference to a certificate, and
an encoding of binary data in a sequence of printable characters.

2. The method of claim 1, further comprising:
updating (S405) the encoding to reflect a change to the certificate; and
wherein the token provides access to an authenticity indicator of the file and wherein the method further comprises updating (S407) the authenticity indicator of the file in response to updating the encoding.

3. The method of claim 2,
wherein updating the encoding comprises accessing the file (315) using the token, wherein accessing the file (315) comprises accessing the encoding; and/or
wherein updating the token comprises updating the authenticity indicator of the file to reflect the updated encoding.

4. The method of claim 2 or 3,
wherein the reference providing access to the file (315) includes a URI;
wherein the reference providing access to the file (315) may include the authenticity indicator.

5. The method of claim any one of the preceding claims,
wherein the indication of ownership is a 42-character hexadecimal address of an owner, an operator or a controller,
wherein the indication of ownership may be an Ethereum address or an Ethereum-based derivative address,
wherein the indication of ownership may be an Externally Owned address.

6. The method of any one of the preceding claims, further comprising
transmitting means of accessing the token to a digital wallet,
wherein the digital wallet may be a cryptocurrency wallet, wherein the digital wallet may be an Ethereum wallet, an Ethereum-based derivative wallet or an NFT wallet.

7. The method of any one of the preceding claims,
wherein the distributed ledger is implemented using a peer-to-peer computer network and/or one or more consensus algorithms for replication across distributed computer nodes;
wherein the distributed ledger may include a blockchain.

8. The method of any one of the preceding claims,
wherein the file (315) is a markup language file,
wherein the file (315) may be an XML or JSON file.

9. The method of any one of the preceding claims,
wherein the encoding is base64, or a variant of base64 such as base122 or baseXML;
wherein the printable characters are human-readable, wherein the printable characters are limited to 95 printable ASCII characters or a subset of the 95 printable ASCII characters.

10. The method of any one of the preceding claims, wherein the server is part of a distributed filesystem, wherein the distributed filesystem is one or more of the following:
permanent,
based on a computer network, wherein the computer network may be peer-to-peer,
permissionless.

11. The method of any one of the preceding claims,
wherein the file (315) further comprises an indication of validity, wherein the indication of validity may include one or more of the following: a duration of validity, an indication of energy consumption, an indication of usage, a counter indicating the number of times the file has been opened;
when the file includes the indication of a duration of validity:
the change to the certificate includes a change in the duration of the validity,
wherein updating the encoding comprises changing the binary data to reflect a decrease in the duration of the validity.

12. The method of claim 11,
wherein the reference to the certificate is a URI;
wherein the identifier, the encoding, the indication of validity and the reference to the certificate are defined using markup language tags.

13. The method of any one of the preceding claims, wherein the binary data includes one or more of the following:
multimedia content,
a static image,
data in a document file format, such as a compressed XML-based format as in docx, or rich text format,
data in a postscript language format, such as portable document format,
audio and/or video content,
a video game,
a natural number, optionally based on the indication of validity.

14. A computer program comprising instructions that, when the program is executed by a computer, cause the computer to carry out the method of any one of the preceding claims.

15. A computer system for processing at least one file (315) using a token, the system comprising:
one or more processors;
a server configured to store the file (315);
a distributed ledger configured to store the token,
wherein the token includes a reference providing access to the file (315) and an indication of ownership, wherein the reference providing access to the file (315) can be used to locate the file (315) on the server,
wherein the file (315) comprises:
an identifier,
a reference to a certificate, and
an encoding of binary data in a sequence of printable characters.
